# EUROPÄISCHE PATENTANMELDUNG

(11) **EP 2 400 616 A2**
(43) Veröffentlichungstag der Anmeldung: **28.12.2011**
(21) Anmeldenummer: 09010924.0
(22) Anmeldetag: 26.08.2009
(51) Int. Cl.: H02J 3/00, H02J 3/38

(54) **Verfahren und Vorrichtung zum netzkonformen Betreiben einer Mehrzahl von dezentralen, mit Verbrauchern/Erzeugern von elektrischer Energie versehenen und an ein elektrisches Niederspannungsnetz angeschlossenen Einheiten**

(30) Priorität: 11.11.2008 DE 102008057563
(71) Anmelder: Fraunhofer-Gesellschaft zur Förderung der angewandten Forschung e.V., 80686 München (DE)
(72) Erfinder: Ringelstein, Jan, 34127 Kassel (DE); Bendel, Christian, 34270 Schauenburg (DE); Nestle, David, 34131 Kassel (DE)

(57) **Zusammenfassung**

Die Erfindung betrifft ein Verfahren und eine Vorrichtung zum netzkonformen Betreiben eines Niederspannungsnetzes (1) mit einer Mehrzahl von dezentralen Einheiten (2a, 2b, 2c), die wenigstens je einen Verbraucher (4, 5) und/oder Erzeuger (6) von elektrischer Energie aufweisen. Die Einheiten (2a, 2b, 2c) sind zum Austausch von Informationen über ein Kommunikationsmedium (21, 22) mit einer übergeordneten, allen Einheiten (2a, 2b, 2c) gemeinsamen Einrichtung (20) verbunden, die von einem Energiehändler betrieben wird. Jede Einheit (2a, 2b, 2c) weist einen Energiemanager (16) auf, der mittels eines Optimierungsprogramms und eines festgelegten Tarifprofils einen für seine Verbraucher (4,5) und Erzeuger (6) wirtschaftlich günstigen Einsatzplan berechnet. Ein netzkonformer Betrieb wird dadurch erreicht, dass an Netzanschlusspunkten (3a, 3b, 3c) der Einheiten (2a, 2b, 2c) sich ergebende Netzparameter auf die Einhaltung von ihnen zugewiesenen Toleranzbereichen überwacht werden und dass die übergeordnete Einrichtung (20), wenn die Netzparameter an wenigstens einem Netzanschlusspunkt (3a, 3b, 3c) die ihnen zugewiesene Toleranzbereiche verlassen, zumindest an eine kritische Einheit (2a) ein abgeändertes Tarifprofil übermittelt, um dadurch die Netzparameter den Toleranzbereichen zumindest wieder anzunähern (Fig. 1).

## Beschreibung

Die Erfindung betrifft ein Verfahren nach dem Oberbegriff des Anspruchs 1 und eine Vorrichtung der im Oberbegriff des Anspruchs 12 angegebenen Gattung.

Die Versorgung von dezentralen Einheiten wie z. B. Industrie- und Wohngebäuden mit elektrischer Energie erfolgt in der Regel über elektrische Niederspannungsnetze. Dabei bezieht sich der Begriff "Energie" allgemein sowohl auf Wirk- als auch auf Blindenergie. Die ordnungsgemäße Funktion derartiger Niederspannungsnetze wird in der Regel von Energieversorgungsunternehmen oder sogenannten Netzbetreibern sichergestellt, während die Lieferung elektrischer Energie an die dezentralen Einheiten mittels der Niederspannungsnetze durch Energiehändler erfolgt, die auch die Energiekosten in Abhängigkeit von der Tageszeit in Form von sogenannten Tarifprofilen festlegen.

Der Anschluss dezentraler Einheiten an das Niederspannungsnetz erfolgt an sogenannten Netzanschlusspunkten. Von diesen führt eine Hauptleitung zu wenigstens einem Stromzähler, der über einen Verteiler an übliche Steckdosen oder auch direkt an verschiedene Verbraucher angeschlossen ist, die auch mit Starkstrom betriebene Geräte sein können. In entsprechender Weise, jedoch mit umgekehrter Flussrichtung, werden die Erzeuger über einen Stromzähler mit dem Netzanschlusspunkt verbunden.

Zur Vermeidung einer Überlastung der Niederspannungsnetze durch die Verbraucher und/oder zur Vermeidung der Schaffung von Überkapazitäten im Netz durch die Erzeuger sind zahlreiche Verfahren und Vorrichtungen bekannt, die entweder nach den Bedürfnissen der Energieversorgungsunternehmen (Netzbetreiber) oder nach den Wünschen von deren Kunden, d. h. den Betreibern der dezentralen Einheiten eingerichtet sind. Aus der Sicht der Energieversorgungsunternehmen kann es z. B. erwünscht sein, den Gesamtenergieverbrauch zu bestimmten Zeiten zu beschränken, während es aus der Sicht der Kunden erwünscht sein kann, den Verbrauch/die Erzeugung von elektrischer Energie so zu steuern, dass sich in Anbetracht der aktuellen Stromtarife günstige Verbrauchskosten und/oder Erzeugungs-erlöse ergeben.

Ein bekanntes Verfahren dieser Art, das insbesondere zur Vermeidung von Leistungsspitzen dient, die von einer Gruppe von ausschließlich aus Verbrauchern bestehenden Einheiten verursacht werden können, macht z. B. die An- und Abschaltung einzelner Verbraucher von deren momentaner Wichtigkeit abhängig (DE 198 42 043 B4). Eine Kühleinrichtung hat z. B. eine hohe Wichtigkeit, wenn ihre Kühltemperatur eine vorgewählte obere Grenze erreicht, da sie dann einen unverzichtbaren Anschluss an das Netz erfordert.

Weiterhin sind Verfahren und Vorrichtungen bekannt (EP 0 886 362 B1), mittels derer Energieversorgungsunternehmen versuchen, die Nachfrage an elektrischer Energie immer dann zu reduzieren, wenn aufgrund einer prognostizierten hohen Nachfrage die Gefahr besteht, dass sie mit der dann von ihnen zu liefernden Energie an ihre Erzeugungskapazität stoßen oder die Kosten für zusätzlich zu erzeugende Energie zu hoch sind. Als Mittel zur Reduzierung der Nachfrage dienen hier sogenannte Anreizzahlungen, die die Kunden dazu veranlassen sollen, ihre Lasten (Verbraucher) für bestimmte Zeitintervalle abzuschalten. Alternativ wird versucht, eine Reduzierung der Lasten durch erhöhte Tarifprofile zu erreichen, insbesondere wenn die Kunden über eigene Erzeugungsanlagen verfügen und daher auf die von ihnen selbst erzeugte Energie ausweichen können, falls deren Erzeugung günstiger als der Strombezug vom Energieerzeugungsunternehmen ist.

Weiterhin ist es bekannt (EP 1 339 153 A2), an ein Niederspannungsnetz angeschlossene, dezentrale Einheiten mit Einrichtungen auszurüsten, die automatisch arbeitende Energiemanager und Messelemente für an den Anschlusspunkten vorhandene Netzparameter aufweisen und über ein bidirektionales Kommunikationsmedium mit dem Netzbetreiber verbunden sind. Die Energiemanager ermöglichen eine Steuerung des Energieflusses zwischen den Verbrauchern/Erzeugern in Abhängigkeit von aktuellen, aus vorgegebenen Tarifprofilen sich ergebenden Bedürfnissen, von aktuellen Energieerzeugungs- und/oder Energieverbrauchsdaten und/oder von aktuell gemessenen Netzparametern.

Schließlich sind die zuletzt genannten Einrichtungen inzwischen dahingehend zu Verfahren und Vorrichtungen der eingangs bezeichneten Gattungen ergänzt worden, dass die Energiemanager mit Hilfe von Optimierungsprogrammen und den vorgegebenen Tarifprofilen automatisch berechnen können, zu welchen Tages- oder Nachtzeiten der Verbrauch und/oder die Erzeugung von elektrischer Energie durch die in einem Gebäude, einem Haushalt od. dgl. vorhandenen Verbraucher/Erzeuger wirtschaftlich besonders günstig ist. Die Tarifprofile werden den Energiemanagern z. B. von einem Energiehändler oder von einer Börse (z. B. EEX) übermittelt und geben die Verbrauchs- bzw. Erzeugerpreise für elektrische Energie am jeweils folgenden Tag an.

Alle beschriebenen bekannten Verfahren und Vorrichtungen berücksichtigen nicht oder nicht ausreichend einen netzkonformen Betrieb des Niederspannungsnetzes. Unter der Bezeichnung "netzkonform" wird im Rahmen der vorliegenden Anmeldung verstanden, dass an den Netzanschlusspunkten genau definierte Netzparameter wie z. B. Spannungen von 230 V, Frequenzen von 50 Hz, vorgewählte Stromtragfähigkeiten zur Vermeidung von Überhitzungen der elektrischen Leitungen od. dgl. eingehalten werden und während des normalen Betriebs nur in engen, vom Netzbetreiber vorgegebenen, ein stabiles Netz garantierenden Toleranzbereichen schwanken dürfen. Außerdem sind die Anschlussleistungen für die einzelnen Einheiten genau festgelegt mit der Folge, dass bei deren Überschreitung zusätzlich eingebaute Sicherungen od. dgl. ansprechen. Bisher wird in der Regel davon ausgegangen, dass die Qualität der Niederspannungsnetze ausreichend gut ist und allen denkbaren Anforderungen gerecht wird.

Der netzkonforme Betrieb von elektrischen Niederspannungsnetzen hat in den letzten Jahren jedoch dadurch beträchtlich an Bedeutung gewonnen, dass die dezentralen Einheiten zunehmend nicht nur über Verbraucher der genannten Art, sondern auch über Erzeuger von elektrischer Energie in Form von Photovoltaik-, Biomassen-, Windkraft- oder Kraft/- Wärme-Kopplungs-(KWK-) Anlagen verfügen können. Außerdem können Anlagen vorhanden sein, die mit elektrischen Speichern ausgerüstet sind und je nach der Richtung des Leistungsflusses als Verbraucher oder als Erzeuger von elektrischer Energie arbeiten können. Eine unerwünschte Folge dieser zahlreichen möglichen Ausgestaltungen der dezentralen Einheiten ist, dass sich in Abhängigkeit davon, wo zu einem bestimmten Zeitpunkt Energie verbraucht und/oder in das Netz eingespeist wird, sehr unterschiedliche Energieflüsse ergeben. Da elektrische Netze normalerweise nicht dazu eingerichtet sind, beliebig viel Energie von einem Punkt A zu einem anderen Punkt B zu übertragen, können sich im Hinblick auf die Netzkonformität ernsthafte Probleme ergeben, wenn sich die genannten Energieflüsse in einer Leitung sammeln oder in eine falsche Richtung fließen. Diesen Problemen wird bisher ausschließlich mit Hilfe von durch den Netzbetreiber installierten Sicherungsmaßnahmen begegnet, die verhindern, dass das Netz beschädigt wird, indem z. B. Leitungen durchbrennen. Derartige Sicherungsmaßnahmen können z. B. darin bestehen, dass das ganze Netz oder zumindest Teilnetze abgeschaltet werden. Das bedeutet, dass von den Netzbetreibern bisher im Wesentlichen nur Maßnahmen ergriffen werden, die auf unerwünschte Energieflüsse reagieren, anstatt vorsorglich Maßnahmen zur Vermeidung unerwünschter Energieflüsse zu treffen. Das gilt insbesondere auch deshalb, weil es für die Netzbetreiber nicht möglich ist oder zumindest mit einem viel zu hohen Aufwand verbunden wäre, alle Netzanschlusspunkte eines Niederspannungsnetzes permanent zu überwachen und rechtzeitig auf unerwünschte Entwicklungen zu reagieren. Es besteht daher ein Bedarf an Verfahren und Vorrichtungen, mittels derer der Verbrauch und/oder die Erzeugung von elektrischer Energie in den einzelnen Einheiten optimal gesteuert werden kann, ohne dadurch den sicheren Netzbetrieb zu gefährden, d. h. die vorhandenen Betriebsmittel des Netzes zu überlasten.

Ausgehend von diesem Stand der Technik liegt der Erfindung das technische Problem zugrunde, die eingangs bezeichneten Verfahren und Vorrichtungen derart weiter zu entwickeln, dass die Steuerung des Verbrauchs/der Erzeugung von elektrischer Energie in den dezentralen Einheiten so erfolgt, dass einerseits entsprechend den Erwartungen der Kunden deren Verbrauch/Erzeugung von elektrischer Energie in einer wirtschaftlich günstigen Weise gesteuert werden kann, andererseits aber dennoch weitgehend vermieden wird, dass die Netzparameter in einem für den Netzbetreiber nicht tolerierbaren Umfang verändert werden.

Zur Lösung dieses Problems sind erfindungsgemäß die Merkmale der Ansprüche 1 und 12 vorgesehen.

Durch die Erfindung wird der Vorteil erzielt, dass die Netzparameter ständig überwacht werden und immer dann, wenn sie aus vorgegebenen Toleranzbereichen herausfallen, von der Seite des Händlers aus versucht wird, durch eine Änderung des Tarifprofils eine Zurückführung der Netzparameter in die Toleranzbereiche zu erreichen. Das bedeutet, dass versucht wird, eine Erhöhung der Tarife zwecks Senkung des Verbrauchs von elektrischer Energie und/oder eine Verringerung der Tarife zwecks Reduzierung der Erzeugung von elektrischer Energie stets von den momentanen Zuständen an den Netzanschlusspunkten abhängig zu machen.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1a und 1b ein schematisches Blockschaltbild einer erfindungsgemäßen Vorrichtung;
Fig. 2 ein beispielhaftes, für einen Tag vorgegebenes Tarifprofil;
Fig. 3 einen anhand des vorgegebenen Tarifprofils nach Fig. 2 berechneten Einsatzplan für verschiedene Geräte einer dezentralen Einheit;
Fig. 4 ein gegenüber Fig. 2 verändertes Tarifprofil; und
Fig. 5 einen mit dem geänderten Tarifprofil nach Fig. 4 neu berechneten Einsatzplan für die Geräte nach Fig. 3.

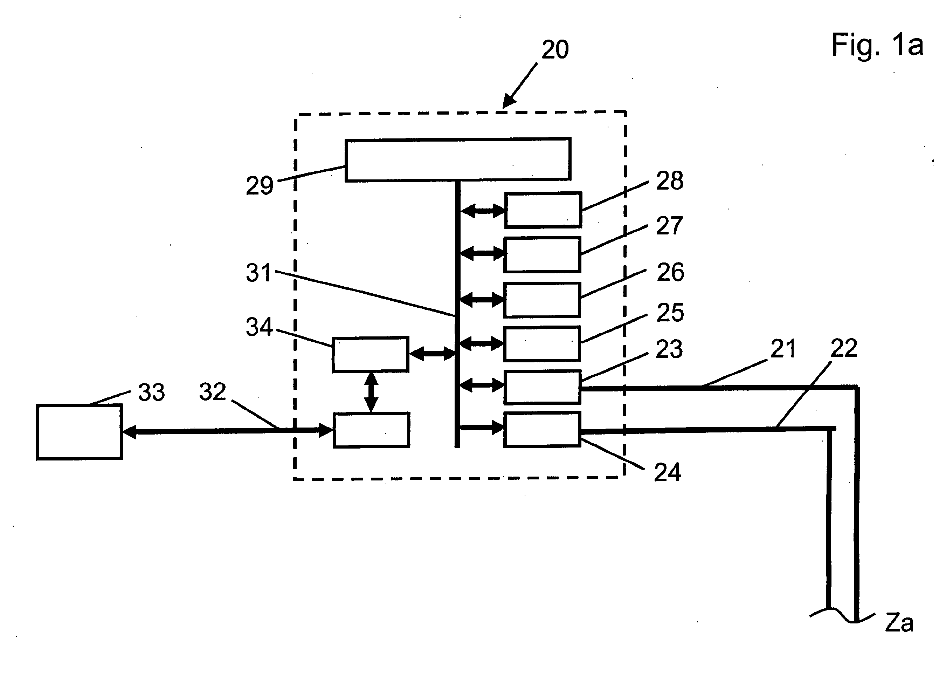

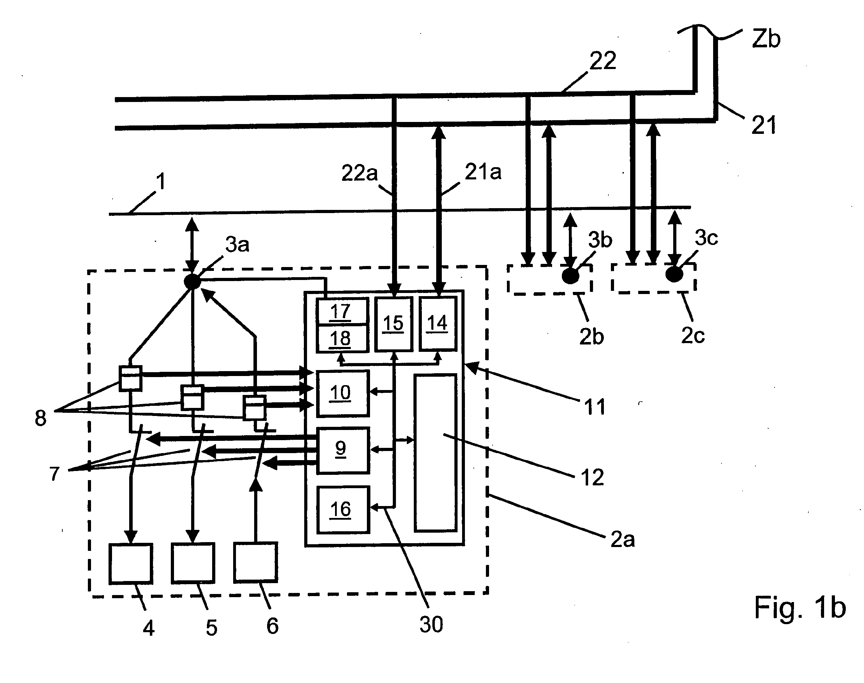

In Fig. 1a und 1b, die an Stellen Za, Zb zusammengesetzt zu denken sind, ist eine z. B. dreiphasige 400 V-Leitung angedeutet, die ein nicht näher dargestelltes Niederspannungsnetz 1 repräsentiert und auch als eine Drehstromleitung ausgebildet sein könnte. Mit dem Bezugszeichen 2a, 2b und 2c sind mehrere dezentrale Einheiten (Kunden, z. B. Wohn- oder Geschäftshäuser) bezeichnet, die zum Austausch von elektrischer Energie über Netzanschlusspunkte 3a, 3b und 3c an das Niederspannungsnetz 1 angeschlossen sind.

Die Einheit 2a enthält wenigstens je einen Verbraucher und einen Erzeuger von elektrischer Energie, wobei im Ausführungsbeispiel ein erster Verbraucher 4 z. B. eine Gefriertruhe, ein zweiter Verbraucher 5 z. B. eine Waschmaschine und ein Erzeuger 6 z. B. eine KWK-Anlage ist. Die Verbraucher 4 und 5 und Erzeuger 6 sind über Schalter 7 und Zähler 8 mit dem Netzanschlusspunkt 3a verbunden. Die Schalter 7 sind mit einer Steuerschaltung 9 verbunden und können mit dieser geöffnet oder geschlossen werden. Die Zähler 8 sind dagegen mit einem Aufzeichnungsgerät 10 verbunden, das in beliebiger Weise dazu dienen kann, die Zählerstände der Zähler 8 festzustellen und aufzuzeichnen. Die Steuerschaltung 9 und das Aufzeichnungsgerät 10 sind Bestandteile einer allgemein mit dem Bezugszeichen 11 versehenen Datenverarbeitungsstation, die außerdem z. B. eine Recheneinheit 12, eine bidirektionale Datenübertragungseinrichtung 14 und eine unidirektionale Datenverarbeitungseinrichtung 15 enthält. Weiterhin enthält die Datenverarbeitungsstation 11 einen Energiemanager 16, eine Messeinrichtung 17, die wenigstens ein Messelement zur Messung wenigstens eines sich am Netzanschlusspunkt 3a ergebenden Netzparameters aufweist, bei dem es sich z. B. um die elektrische Spannung, die Netzfrequenz, die Netzimpedanz und/oder den Wirk- und Blindleistungsfluss handeln kann, und einen an die Messeinrichtung 17 angeschlossenen Alarmsignalerzeuger 18. Dieser enthält z. B. einen Vergleicher, dem einerseits die von der Messeinrichtung 17 ermittelten Istwerte der gemessenen Netzparameter und diesen zugeordnete Sollwerte zugeführt werden und der andererseits so eingerichtet ist, dass er ein Alarmsignal an die bidirektionale Datenübertragungseinrichtung 14 übermittelt, wenn ein Vergleich der Istwerte mit den Sollwerten ergibt, dass der oder die im Einzelfall betrachteten Netzparameter aus ihnen zugewiesenen Toleranzbereichen herausfallen. Die Sollwerte und die Toleranzbereiche werden in der Regel vom Betreiber des Niederspannungsnetzes 1 festgelegt.

Die Einheit 2a ist ferner über ein Kommunikationsmedium mit einer übergeordneten Einrichtung 20 verbunden, die von einem Energiehändler betrieben wird, der mittels des Niederspannungsnetzes 1 elektrische Energie an die Einheiten 2a, 2b und 2c liefert oder elektrische Energie von diesen Einheiten abnimmt.

Die Einheiten 2b und 2c sind in derselben Weise wie die Einheit 2a an die übergeordnete Einrichtung 20 angeschlossen und bis auf die Verbraucher 4, 5 und/oder Erzeuger 6, die von Einheit zu Einheit variieren können, genauso wie die Einheit 2a ausgebildet, weshalb sie nicht gesondert beschrieben werden.

Das Kommunikationsmedium ist hier als eine Kombination aus einer bidirektionalen Datenübertragungsleitung 21 und einer unidirektionalen Datenübertragungsleitung 22 dargestellt, die einerseits über Anschlussleitungen 21a, 22a mit den Datenübertragungseinrichtungen 14 und 15 und andererseits mit entsprechenden Datenübertragungseinrichtungen 23 und 24 der Einrichtung 20 verbunden sind. Hierbei wird die unidirektionale Datenübertragungsleitung 22 bevorzugt für die Kommunikation von der übergeordneten Einrichtung 20 an die Einheiten 2a, 2b, 2c verwendet, um die bidirektionale Datenübertragungsleitung 21 zu entlasten. Für den Fachmann versteht sich jedoch, dass der Datenaustausch zwischen den Einheiten 2a, 2b, 2c und der übergeordneten Einrichtung 20 anstatt durch die elektrischen Leitungen 21, 22 alternativ auch durch optische Datenübertragungsleitungen, per Funk mit Hilfe von Sende- und Empfangsantennen, durch hochfrequente Modulation der Netzspannung durch das Niederspannungsnetz 1 oder sonstwie erfolgen könnte. Der Datenaustausch kann für alle vorhandenen Einheiten 2a, 2b und 2c in derselben Weise erfolgen.

Die übergeordnete Einrichtung 20 enthält außerdem Datenübertragungseinrichtungen 23 und 24, eine Alarmsignal-Empfangseinrichtung 25, die die Alarmsignale des Alarmsignalerzeugers 18 empfangen und weiter verarbeiten kann, eine Tarifprofil-Ausgabeeinrichtung 26, eine Tarifanfrage-Ausgabeeinrichtung 27 und eine Tarifänderungsvorschlag-Empfangseinrichtung 28, wobei die Einrichtungen 23 bis 28 zweckmäßig Bestandteile eines Zentralrechners 29 der übergeordneten Einrichtung 20 sind. Abgesehen davon werden die Datenverarbeitungseinheit 11 und der Zentralrechner 29 vorzugsweise in bekannter Mikroprozessorbauweise realisiert, wobei die verschiedenen Baugruppen durch lokale Kommunikationsnetze 30 bzw. 31 miteinander verbunden sind.

Schließlich kann vorgesehen sein, die übergeordnete Einrichtung 20 des Energiehändlers über ein weiteres bidirektionales Kommunikationsmedium 32 mit einem Energieversorgungsunternehmen oder Netzbetreiber 33 zu verbinden, um mit diesem Daten auszutauschen. Umgekehrt kann der Netzbetreiber 33 der Einrichtung 20 die im Einzelfall zulässigen Toleranzbereiche für die Netzparameter mitteilen, die z. B. in einem Datenspeicher 34 gespeichert und von der Einrichtung 20 an die Alarmsignalerzeuger 18 übermittelt werden.

Der Betrieb der anhand der Fig. 1a und 1b beschriebenen Vorrichtung kann auf verschiedene Weise erfolgen. In jedem Fall ist in an sich bekannter Weise vorgesehen, dass die Energiemanager 16 der Einheiten 2a, 2b, 2c anhand von in sie implementierten Optimierungsprogrammen jeweils einen Einsatzplan für die in ihrer Einheit 2a, 2b, 2c vorhandenen Verbraucher 4, 5/Erzeuger 6 erarbeiten. Dieser Einsatzplan wird unter Berücksichtigung eines vom Händler oder einer Tarifbörse vorgegebenen Tarifprofils berechnet und legt fest, zu welchen Tages- und Nachtzeiten es wirtschaftlich sinnvoll ist, die Verbraucher 4, 5/Erzeuger 6 mit den zugeordneten Netzanschlusspunkten 3a, 3b, 3c zu verbinden und von diesen zu trennen und/oder mit reduzierter oder erhöhter Leistung zu betreiben. Die Einsatzpläne legen somit die Zeitintervalle, zu denen Energie verbraucht/- erzeugt wird, sowie die Höhe des Energieverbrauchs bzw. der Energieerzeugung in diesen Zeitintervallen fest. Die Tarifprofile und entsprechend die Einsatzpläne können sich beispielsweise von Tag zu Tag ändern und in bestimmten Abständen unterschiedliche Verbrauchskosten und/oder Erzeugererlöse beinhalten. Sind z. B. die aktuellen Kosten für den Verbrauch von Energie hoch, werden insbesondere solche Geräte, die viel Energie verbrauchen, abgeschaltet oder in ihrer Leistung gedrosselt, bis die Kosten wieder deutlich niedriger sind. Entsprechend kann es empfehlenswert sein, die Lieferung von Energie in das Netz zu reduzieren oder zu unterbrechen, wenn die aktuell erzielbaren Erlöse zu gering sind.

Erfindungsgemäß werden die Verbraucher/Erzeuger mit Hilfe geeigneter Änderungen der Tarifprofile so gesteuert, dass das Niederspannungsnetz netzkonform betrieben wird. Hierzu werden mit Hilfe der Messeinrichtungen 17 die Netzparameter an den Netzanschlusspunkten 3a, 3b, 3c überwacht. Diese Überwachung kann permanent entweder dezentral in den einzelnen Einheiten 2a, 2b, 2c oder auch dadurch erfolgen, dass die Messdaten mit Hilfe des Kommunikationsmediums 21, 22 laufend von der übergeordneten Einrichtung 20 aus abgefragt werden. Möglich wäre auch, die Überwachung nur intermittierend durchzuführen, indem sie z. B. jeweils durch ein von der übergeordneten Einrichtung 20 an die Einheiten 2a, 2b, 2c oder deren Messeinrichtungen 17 übermitteltes Signal eingeleitet und beendet wird.

Wird mit Hilfe der Alarmsignalerzeuger 18 festgestellt, dass am Netzanschlusspunkt 3a, 3b, 3c irgendeiner Einheit 2a, 2b, 2c die Netzparameter aus den ihnen zugewiesenen Toleranzbereichen herausfallen, dann wird von der Einrichtung 20 aus mittels der Tarifprofil-Ausgabeeinrichtung 26 zumindest an diese kritische Einheit ein abgeändertes Tarifprofil übermittelt, das sich von dem vorher für einen bestimmten Tag od. dgl. festgelegten Tarifprofil zumindest zeitweilig unterscheidet. Erfindungsgemäß ist das geänderte Tarifprofil so gewählt, dass es, falls es von der betroffenen Einheit übernommen wird, dazu führt, dass die Netzparameter dieser Einheit zumindest wieder den Toleranzbereichen angenähert werden. Die Übernahme des geänderten Tarifprofils erfolgt dadurch, dass dieses über das Kommunikationsmedium 21, 22 dem Energiemanager 16 der betroffenen Einheit 2a, 2b, 2c übermittelt und dann von dessen Optimierungsprogramm dazu benutzt wird, den Einsatzplan für die Verbraucher 4, 5/Erzeuger 6 neu zu berechnen. Dies ist weiter unten anhand eines Ausführungsbeispiels näher erläutert.

Zur Vereinfachung der Darstellung werden nachfolgend diejenigen Einheiten 2a, 2b oder 2c, bei denen die Netzparameter die Toleranzbereiche verlassen, als "kritische" Einheiten bezeichnet. Außerdem wird in der weiteren Beschreibung davon ausgegangen, dass die aus Fig. 1a und 1b ersichtliche Einheit 2a eine solche kritische Einheit ist.

Bei einer bevorzugten Verfahrensweise wird die Einhaltung der Toleranzbereiche dezentral in jeder Einheit und vorzugsweise permanent überwacht. Bei Nichteinhaltung der Toleranzbereiche erzeugt der Alarmsignalgenerator 18 der kritischen Einheit 2a automatisch ein Alarmsignal, das an die übergeordnete Einrichtung 20 gesandt und in dieser zum Anlass genommen wird, ein geändertes Tarifprofil zu generieren und an die kritische Einheit 2a zu übermitteln. Dieses geänderte Tarifprofil wird vorzugsweise in Abhängigkeit davon, wie stark die Netzparameter der kritischen Einheit 2a aktuell von den Toleranzbereichen abweichen, so gewählt, dass es zu einer schnellen und wirksamen Zurückführung der Netzparameter in die Toleranzbereiche führt.

Ein besonders bevorzugtes Ausführungsbeispiel der erfindungsgemäßen Verfahren und Vorrichtungen sieht vor, dass die übergeordnete Einrichtung 20 dann, wenn die Netzparameter die Toleranzbereiche verlassen, der kritischen Einheit 2a zunächst über die Tarifanfrage-Ausgabeeinrichtung 27 ein Tarifanfragesignal übermittelt. Auf dieses Tarifanfragesignal hin wird vom Optimierungsprogramm der kritischen Einheit 2a berechnet, in welcher Weise das aktuell gültige Tarifprofil hinsichtlich der Preisgestaltung und gegebenenfalls der Gültigkeitsdauer geändert werden müsste, um für die kritische Einheit 2a wirtschaftlich interessant zu sein und zur Änderung des momentan gültigen Einsatzplans verwendet zu werden. Als Antwort auf das Tarifanfragesignal generiert das Optimierungsprogramm ein Tarifänderungsvorschlag-Signal, das der Empfangseinrichtung 28 der übergeordneten Einrichtung 20 zugeleitet wird. Die übergeordnete Einrichtung 20 legt dann unter Berücksichtigung des Tarifänderungsvorschlags ein im Zentralrechner 29 berechnetes, für den Energiehändler annehmbares Tarifprofil fest und sendet dieses über die Ausgabeeinrichtung 26 der kritischen Einheit 2a zu. Ist das neue Tarifprofil mit dem Tarifänderungsvorschlag kompatibel, d. h. mindestens genauso günstig wie dieser, dann berechnet der Energiemanager 16 anhand des geänderten Tarifprofils einen neuen Einsatzplan für seine Verbraucher 4, 5/Erzeuger 6 mit der Folge, dass sich der Verbrauch/die Erzeugung von elektrischer Energie von der kritischen Einheit 2a derart ändert, dass die Netzparameter den vorgegebenen Toleranzbereichen zumindest angenähert, vorzugsweise wieder in diese überführt werden. Ist die von der übergeordneten Einrichtung 20 festgelegte Tarifänderung dagegen nicht mit dem Tarifänderungsvorschlag kompatibel, d. h. wirtschaftlich ungünstiger als dieser, dann gibt es in Abhängigkeit von der Gestaltung des jeweiligen Optimierungsprogramms zwei Möglichkeiten. Die eine Möglichkeit sieht vor, dass die kritische Einheit 2a das geänderte Tarifprofil übernimmt und den Einsatzplan entsprechend ändert, selbst wenn dies wirtschaftlich weniger effektiv ist, als es der Fall wäre, wenn die Tarifänderung dem Tarifänderungsvorschlag entsprechen würde. Die zweite Möglichkeit sieht vor, dass das geänderte Tarifprofil zwar von der kritischen Einheit 2a akzeptiert, d. h. der Verbrauch/die Erzeugung von Energie nach dem geänderten Tarifprofil abgerechnet, aber nicht zur zeitlichen Änderung des Verbrauchs/der Erzeugung von elektrischer Energie, d. h. zur Berechnung eines neuen Einsatzplans umgesetzt wird.

Eine besondere Bedeutung enthalten das erfindungsgemäße Verfahren und die erfindungsgemäße Vorrichtung dann, wenn an die übergeordnete Einrichtung 20 eine Vielzahl (z. B. tausende) von dezentralen Einheiten 2a, 2b, 2c angeschlossen ist. In diesem Fall wird das Tarifanfragesignal nicht nur an die kritische Einheit 2a, sondern auch an andere oder alle anderen Einheiten 2b, 2c usw. übermittelt, die dann ihrer-seits die beschriebenen Tarifänderungsvorschlag-Signale an die übergeordnete Einrichtung 20 senden. Das gilt natürlich auch dann, wenn die Netzparameter gleichzeitig an mehreren Netzanschlusspunkten 3a, 3b, 3c aus den jeweiligen Toleranzbereichen herausfallen, wobei auch vorgesehen sein kann, dass die Tarifanfragesignale erst dann abgesendet werden, wenn eine bestimmte Anzahl von Alarmsignalen bei der übergeordneten Einrichtung 20 eingegangen sind und dadurch ein besonders kritischer Zustand signalisiert wurde. Die übergeordnete Einrichtung 20 errechnet das geänderte Tarifprofil in diesem Fall vorzugsweise unter Berücksichtigung aller erhaltenen Tarifänderungsvorschläge, indem z. B. ein Mittel aus allen eingegangenen Tarifänderungsvorschlägen gebildet wird, und übermittelt das geänderte Tarifprofil dann allen beteiligten Einheiten 2a, 2b und 2c. Diese können in der oben beschriebenen Weise das geänderte Tarifprofil zur Berechnung eines geänderten Einsatzplans für die bei ihnen vorhandenen Verbraucher 4, 5/Erzeuger 7 benutzen, wenn es mit dem eigenen Tarifänderungsvorschlag kompatibel ist, oder zwar den Verbrauch/die Erzeugung elektrischer Energie zwangsläufig nach dem geänderten Tarifprofil abrechnen, ohne jedoch den aktuellen Einsatzplan zu ändern.

Zur Beschleunigung des Versuchs, die aus ihren Toleranzbereichen herausgefallenen Netzparameter wieder in die Toleranzbereiche zurückzuführen, kann es zweckmäßig sein, den Zentralrechner 29 der übergeordneten Einrichtung 20 so zu programmieren, dass das geänderte Tarifprofil immer bereits dann generiert und an alle Einheiten 2a, 2b, 2c übermittelt wird, wenn eine vorgewählte Anzahl dieser Einheiten 2a, 2b, 2c ihre Tarifänderungsvorschläge übermittelt hat oder wenn seit dem Empfang des Alarmsignals eine bestimmte Zeitspanne vergangen ist. Der Zentralrechner 29 ist zu diesem Zweck vorzugsweise mit geeigneten Zählern versehen. Dadurch lässt sich die Reaktionszeit, mit der auf kritische Abweichungen der Netzparameter von vorgegebenen Sollwerten reagiert werden kann, in vorgewählten Grenzen halten.

Ist durch das geänderte Tarifprofil erreicht worden, dass die Netzparameter bei den kritischen Einheiten 2a wieder in den ihnen zugewiesenen Toleranzbereichen liegen, kann in Weiterbildung des erfindungsgemäßen Verfahrens vorgesehen sein, dass das geänderte Tarifprofil danach wieder durch das vorher gültige Tarifprofil ersetzt wird, das z. B. für einen bestimmten Tag vorgesehen war. Diese erneute Änderung wird vom Energiehändler über die übergeordnete Einrichtung 20 zwangsweise durchgeführt und mit Hilfe der Optimierungsprogramme der verschiedenen Einheiten 2a, 2b, 2c vorzugsweise, wenn auch nicht notwendigerweise, dazu genutzt, den ursprünglich für dieses Tarifprofil vorgesehenen Einsatzplan wieder herzustellen. Dadurch wird erreicht, dass in der Regel die pro Tag od. dgl. vorgegebenen Tarifprofile gelten und geänderte Tarifprofile möglichst nur für begrenzte Zeitspannen aufrecht erhalten werden, falls dies zur Einhaltung der Netzkonformität erforderlich ist. Alternativ kann das natürlich auch dadurch erreicht werden, dass das geänderte Tarifprofil immer nur für eine vorgewählte kleine Zeitspanne festgelegt wird.

Handelt es sich um eine übergeordnete Einrichtung 20, an die eine sehr große Anzahl von Einheiten 2a, 2b, 2c angeschlossen ist, kann es zweckmäßig sein, diese in einzelne Gruppen aufzuteilen und die oben erläuterten Verfahrensschritte in jeder Gruppe separat durchzuführen.

Die Steuerung des Verbrauchs/der Erzeugung von elektrischer Energie, bezogen auf das Niederspannungsnetz 1, erfolgt vorzugsweise dadurch, dass die Energiemanager 16 die Ein- bzw. Ausschaltintervalle der Schalter 7 mit Hilfe der Steuerschaltungen 9 entsprechend steuern. In Fällen von Anlagen wie z. B. KWK-Anlagen, deren Verbrauch/Erzeugung von Energie auch je nach Bedarf erhöht oder reduziert werden kann, erfolgt die Steuerung des Verbrauchs/der Erzeugung zweckmäßig dadurch, dass die Energiemanager 16 den diesbezüglichen Steuermitteln dieser Anlagen direkt entsprechende Steuersignale zusenden.

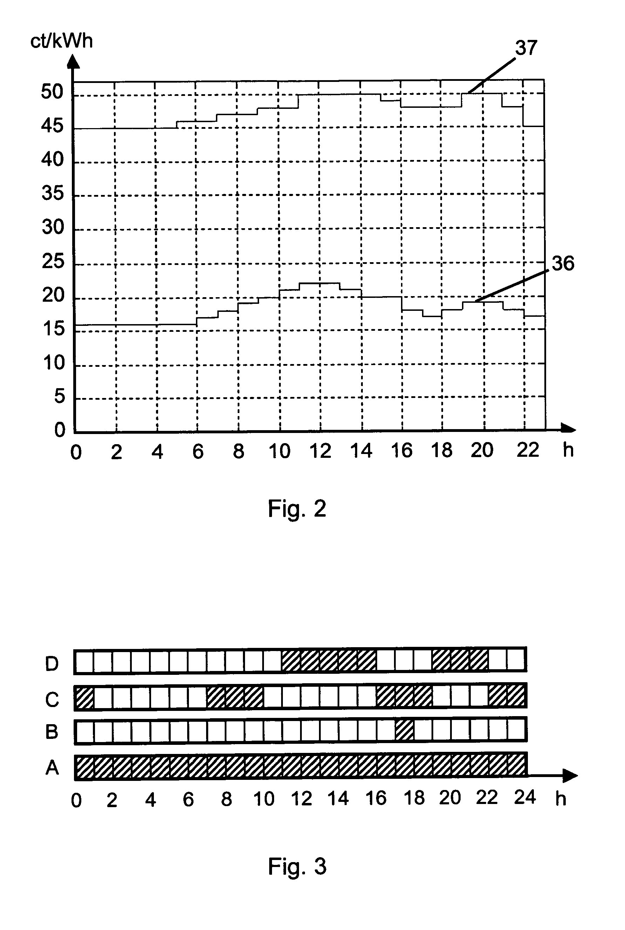

Fig. 2 zeigt beispielhaft ein für einen Tag vorgegebenes Tarifprofil. Längs der Abszisse eines Koordinatensystems ist die Tageszeit in Stunden und längs der Ordinate der Tarif in Cent pro Kilowattstunde aufgetragen. Eine Kurve 36 gibt die Kosten für den Verbrauch an dem Netz 1 entnommener Energie und eine Kurve 37 die Erlöse für die erzeugte und in das Netz 1 eingespeiste Energie an. Daraus ist ersichtlich, dass beide Kurven 36, 37 z. B. gegen 12 Uhr und gegen 20 Uhr die höchsten und für die Nachtzeit (z. B. zwischen 0 Uhr und 6 Uhr) die niedrigsten Kosten und Erlöse anzeigen.

In Fig. 3 ist beispielhaft ein Einsatzplan für den Fall dargestellt, dass die betreffende Einheit über je einen Verbraucher in Form einer Waschmaschine (Zeile B) und eines Kühlschranks (Zeile C) und einen Erzeuger in Form einer KWK-Anlage (Zeile D) und schließlich über eine Anzahl von Verbrauchern (Zeile A) verfügt, bei denen es sich um übliche Steckdosen handelt, an die irgendwelche Geräte anschließbar sind, die wie z. B. Radio- und Fernsehgeräte, Lampen, Computer od. dgl., die 24 Stunden am Tag verfügbar sein sollen. In Zeilenrichtung ist in Fig. 3 jeweils die Tageszeit (Stunden) angegeben, wobei jeder Stunde eines der Felder zugeordnet ist. Ein weißes Feld bedeutet, dass der betreffende Verbraucher/Erzeuger komplett ausgeschaltet ist, während ein schraffiertes Feld bedeutet, dass der betreffende Verbraucher/Erzeuger eingeschaltet ist.

Für den in Fig. 2 und 3 betrachteten Tag sei angenommen, dass das Optimierungsprogramm einer Einheit 2a, 2b, 2c aufgrund des für den folgenden Tag festgelegten Tarifprofils (Fig. 2) den aus Fig. 3 ersichtlichen Einsatzplan berechnet hat. Danach ist insbesondere vorgesehen, die Steckdosen (Zeile A in Fig. 3) permanent an das Netz 1 anzuschließen. Dagegen ist die Waschmaschine (Zeile B) nur von 17 Uhr bis 18 Uhr an das Netz 1 angeschlossen und kann daher nur zu dieser Zeit betrieben werden, weil zu dieser Zeit die Verbrauchskosten trotz der für den Kunden günstigen Tageszeit relativ gering sind. Dagegen soll der Kühlschrank (Zeile C) von 7 Uhr bis 10 Uhr, von 16 Uhr bis 19 Uhr und von 22 Uhr bis 1 Uhr eingeschaltet sein. Dadurch wird einerseits jeweils ein vergleichsweise günstiger Verbrauchspreis genutzt und andererseits sichergestellt, dass der Kühlschrank periodisch eingeschaltet wird, um seine übliche Kühlfunktion zu erfüllen und eine zu starke Erwärmung des Kühlguts zu vermeiden. Die KWK-Anlage (Zeile D) ist schließlich von 11 Uhr bis 16 Uhr und von 19 Uhr bis 22 Uhr in Betrieb, um dadurch den Wärmebedarf der betrachteten Einheit zu decken. Wenn z. B. eine KWK-Anlage mit einem großen Warmwasserspeicher vorhanden ist, genügt ein über den Tag verteilter Betrieb, der vorzugsweise zu Zeiten erfolgt, in denen die Erlöserpreise günstig sind (vgl. Fig. 2, Kurve 37).

Es sei weiter angenommen, dass die in Fig. 2 und 3 betrachtete Einheit von einem Niederspannungsnetz 1 betrieben wird, an das eine große Anzahl von Photovoltaikanlagen angeschlossen ist. Ferner sei die Sonneneinstrahlung an dem auch in Fig. 2 und 3 betrachteten Tag gegen 12 Uhr unerwartet hoch und auch die Netzspannung am betreffenden Netzanschlusspunkt sehr hoch, da an diesem z. B. gleichzeitig nur wenige Verbraucher zugeschaltet sind. Das hat im Beispielsfall zur Folge, dass der Netzparameter "Spannung" an wenigstens einem Netzanschlusspunkt 3a, 3b, 3c überschritten wird und der betreffende Alarmsignalerzeuger 18 gegen 14 Uhr anspricht. Die übergeordnete Einrichtung 20 sendet infolgedessen praktisch gleichzeitig ein Tarifanfragesignal u. a. auch an die kritische Einheit 2a, um zu erfahren, welche Tarifänderung dort als Anreiz nötig ist, um in den nächsten zwei Stunden von 14 Uhr bis 16 Uhr eine Zuschaltung von Verbrauchern und eine Abschaltung von Erzeugern zu erreichen.

Aufgrund der Tarifanfrage ermittelt der Energiemanager 16 mit Hilfe des Optimierungsprogramms, dass der Kühlschrank (Zeile C in Fig. 3) bereits zwischen 14 Uhr und 16 Uhr eingeschaltet werden könnte, wenn die Verbrauchskosten zu dieser Zeit nur 18 ct/kWh statt normal 20 ct/kWh (Fig. 2) betragen würden. Außerdem ermittelt der Energiemanager 16, dass die Waschmaschine (Zeile B in Fig. 3) bereits für einen Betrieb vorbereitet ist und daher sofort zugeschaltet werden könnte, wenn der Verbrauchspreis nur 17 ct/kWh beträgt. Schließlich ermittelt der Energiemanager 16, dass ein Betrieb der KWK-Anlage der betreffenden Einheit wirtschaftlich nicht besonders günstig ist, wenn der Erlöserpreis nur 47 ct/kWh oder weniger beträgt, und dass die KWK-Anlage daher bei diesem Tarif zwischen 14 Uhr und 16 Uhr auch ausgeschaltet bleiben könnte.

Aufgrund dieser Ermittlungen übersendet der Energiemanager 16 der betreffenden Einheit nun in der oben beschriebenen Weise einen Tarifänderungsvorschlag an die übergeordnete Einrichtung 20 mit dem Inhalt, den Verbrauchstarif von 14 Uhr bis 16 Uhr auf 18 ct/kWh, vorzugsweise 17 ct/kWh, und den Erzeugertarif in demselben Zeitintervall auf 47 ct/kWh oder weniger zu senken. Außerdem könnte das Tarifänderungsvorschlag-Signal auch eine Information dahingehend enthalten, dass bei einer Senkung des Verbrauchstarifs auf 18 ct/kWh die Kühlschrankleistung von z. B. 100 Watt für die gesamte Zeit von 14 Uhr bis 16 Uhr zugeschaltet würde.

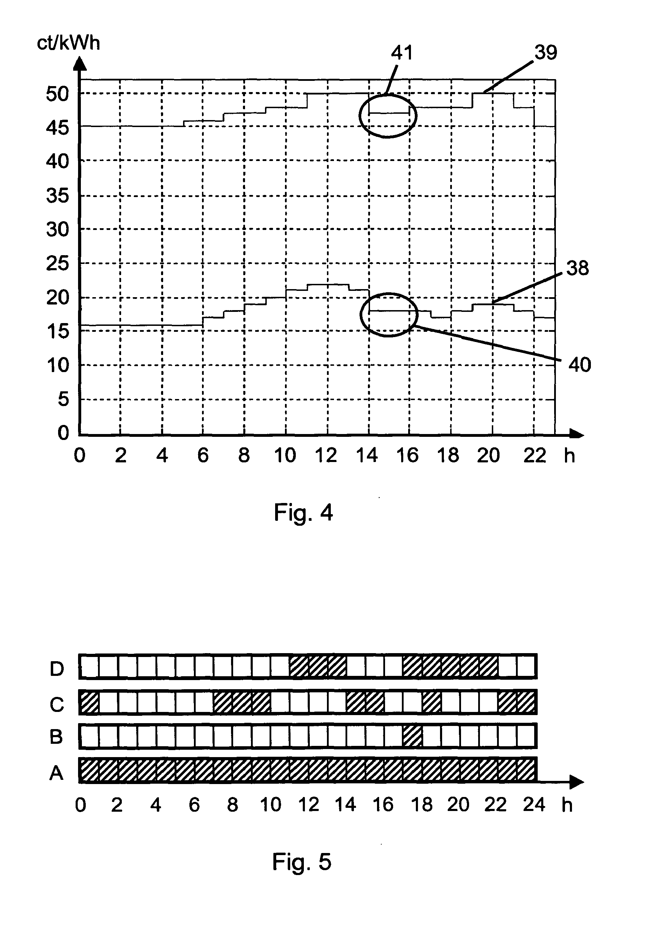

Im Zentralrechner 29 der übergeordenten Einrichtung 20 wird aufgrund des Tarifänderungsvorschlags ein geändertes Tarifprofil berechnet, das für die Zeit von 14 Uhr bis 16 Uhr einen Preis von 18 ct/kWh für den Verbrauch und einen Erlös von 47 ct/kWh für die Erzeugung von Energie festgelegt und der betreffenden Einheit 2a, 2b oder 2c mitgeteilt wird. Dieses geänderte Tarifprofil ist analog zu Fig. 2 anhand von zwei Kurven 38 und 39 in Fig. 4 dargestellt, wobei die Tarifänderungen jeweils durch einen Kreis 40, 41 markiert sind.

Der Energiemanager 16 der betreffenden Einheit ändert aufgrund des geänderten Tarifprofils den Einsatzplan für seine Verbraucher/Erzeuger in der Weise, wie aus der entsprechend Fig. 3 aufgebauten Fig. 5 ersichtlich ist. Danach sind die Steckdosen (Zeile A) wie bisher durchgehend an das Netz geschaltet. Die Waschmaschine (Zeile B) bleibt weiterhin nur in der Zeit von 17 Uhr bis 18 Uhr betriebsbereit, da der vorgeschlagene Verbrauchspreis von 17 ct/kWh nicht erreicht wurde. Der Kühlschrank (Zeile C) wird im Vergleich zu Fig. 3 von 14 bis 16 Uhr zugeschaltet und bleibt stattdessen von 16 Uhr bis 18 Uhr abgeschaltet, was im Hinblick auf die einzuhaltende Kühltemperatur möglich ist. Schließlich wird die KWK-Anlage (Zeile D) von 14 Uhr bis 16 Uhr abgeschaltet und stattdessen von 17 Uhr bis 19 Uhr eingeschaltet, was wegen des vorhandenen Warmwasserspeichers ebenfalls unproblematisch ist.

Wie sich Fig. 4 und 5 entnehmen lässt, führt die von der übergeordneten Einrichtung 20 festgelegte Tarifänderung somit in der kritischen Zeit der starken Sonneneinstrahlung zu einer Abschaltung der KWK-Anlage und zur Einschaltung einer Last in Form eines Kühlschranks. Das hat zur Folge, dass die Netzspannung am betreffenden Netzanschlusspunkt 3a, 3b, 3c wieder in den Normbereich abgesenkt wird, was mittels der Messeinrichtungen 17 überwacht und der übergeordneten Einrichtung 20 mitgeteilt werden kann. Sobald dies der Fall ist, kann außerdem auf das ursprünglich für diesen Tag vorgesehene Tarifprofil nach Fig. 2 zurückgekehrt werden. Außerdem ist klar, dass Tarifänderungsvorschlag-Signale nicht nur von der kritischen Einheit 2a, sondern von allen anderen Einheiten 2b, 2c usw. erzeugt werden können und dass das letztendlich von der übergeordneten Einrichtung 20 erzeugte Tarifänderungssignal unter Berücksichtigung aller Tarifänderungsvorschläge berechnet werden kann. Das könnte z. B. die Folge haben, dass die in Fig. 4 und 5 betrachtete Einheit zwar nach dem neuen Tarifprofil abrechnet, aber ihren Einsatzplan nach Fig. 3 unverändert beibehält, weil eine Änderung des Einsatzplans in wirtschaftlicher Hinsicht wenig sinnvoll wäre.

Weiter wäre es möglich, dass die Einheiten 2a, 2b, 2c der übergeordneten Einrichtung 20 nicht nur einen Tarifänderungsvorschlag, sondern mehrere alternative Tarifänderungsvorschläge mitteilen. Je nach erfolgter Festlegung des neuen Tarifprofils durch die Einrichtung 20 sind dann unterschiedliche Änderungen der Einsatzpläne denkbar.

Anstelle der beispielhaft beschriebenen Tarifprofiländerung sind im Rahmen der Erfindung natürlich auch andere Tarifprofiländerungen möglich, um die Netzkonformität an den Netzanschlusspunkten beizubehalten oder wiederherzustellen. Hierfür gelten im Wesentlichen die folgenden Regeln.

Ist an einem Netzanschlusspunkt z. B. die Spannung aktuell zu niedrig, weil ein hoher Verbrauch und eine geringe Erzeugung von elektrischer Energie stattfinden, dann kann der Energiehändler entweder die Verbrauchskosten sofort erhöhen oder mitteilen, dass diese zu einem späteren Zeitpunkt reduziert werden. Alternativ oder zusätzlich kann durch sofortige Erhöhung oder durch eine spätere Reduzierung der Einspeisevergütung erreicht werden, dass Erzeuger zugeschaltet oder regelbare Erzeuger wie z. B. KWK-, Biogas- oder Dieselanlagen mit erhöhter Leistung betrieben werden.

Ist dagegen an einem Netzanschlusspunkt z. B. die Spannung aktuell zu hoch, weil zu wenig Energie verbraucht oder von PV-Anlagen od. dgl. zu viel Energie in das Netz eingespeist wird, dann können die Verbraucherpreise entweder sofort reduziert oder zu einem späteren Zeitpunkt erhöht werden, um Anreize für einen sofortigen erhöhten Energieverbrauch zu schaffen. Alternativ oder zusätzlich kann die Einspeisevergütung entweder sofort reduziert oder zu einem späteren Zeitpunkt erhöht werden, um eine schnelle Drosselung der Energieeinspeisung in das Netz zu erreichen.

Verlassen andere Netzparameter wie z. B. die Netzfrequenz die ihnen zugeordneten Toleranzbereiche, dann kann durch analoge Steuerung des Verbrauchs/der Erzeugung gewährleistet werden, dass die geforderten Netzparameter wieder hergestellt werden. Eine zu hohe Frequenz bedeutet dabei z. B. einen zu niedrigen Verbrauch oder eine zu hohe Einspeisung von elektrischer Energie.

Schließlich ist klar, dass der jeweilige Kunde (Einheit 2a, 2b, 2c) von sich aus prüfen und entscheiden kann, welche Tarifänderung er für zweckmäßig hält und welche Verbraucher/- Erzeuger er ab- oder zuschalten wird, wenn die Tarifänderung ein von ihm für wirtschaftlich sinnvoll gehaltenes Maß erreicht oder überschreitet.

In Anbetracht der obigen Verfahrensweise kann es schließlich zweckmäßig sein, zumindest einige der bei einem Kunden befindlichen Geräte mit einem Schalter od. dgl. zu versehen, mittels dessen der Kunde dem Energiemanager 16 signalisiert, ob diese Geräte einsatzbereit sind oder nicht. Auf diese Weise kann der Kunde z. B. eine Waschmaschine oder einen Wäschetrockner bereits morgens füllen und daraufhin deren Bereitschaftsstellung anzeigen, während mittels des Energiemanagers 16 letztendlich entschieden wird, wann im Verlauf des Tages der Wasch- oder Trocknungsvorgang durchgeführt wird. Die Mitteilung der Bereitschaftsstellung kann alternativ auch mit anderen Mitteln erfolgen, die eine Kommunikation mit dem Energiemanager 16 ermöglichen.

Die Erfindung ist nicht auf die beschriebenen Ausführungsbeispiele beschränkt, die auf vielfache Weise abgewandelt werden können. Das gilt insbesondere für den Aufbau der anhand der Fig. 1 beschriebenen Vorrichtung, insbesondere auch für die Art und Weise, wie die Netzparameter überwacht, der übergeordneten Einrichtung 20 mitgeteilt und in dieser verarbeitet werden. Außerdem ist klar, dass weder das Optimierungsprogramm der einzelnen Einheiten noch das Programm, nach dem der Zentralrechner 29 arbeitet, zur Erfüllung aller oben beschriebenen Funktionen eingerichtet sein muss. Weiter können die Datenverarbeitungsstation 11 und der Zentralrechner 29 in jeder zweckmäßigen Weise ausgestaltet sein, weshalb die Einrichtungen 14, 15 und 25 bis 28 nur schematisch dargestellt sind, um die gewünschte Funktion zu erläutern. Weiter können die Einsatzpläne nach Fig. 3 und 5 auch in der Weise modifiziert werden, dass die Verbrauchs- oder Erzeugerleistungen der verschiedenen Geräte an einem Tag mehrfach verändert werden. Außerdem ist klar, dass das Optimierungsprogramm des Energiemanagers 16 und das Betriebsprogramm des Zentralrechners 29 mit allen erforderlichen Informationen über die Verbrauchs- oder Lieferleistungen und sonstige Leistungen der verschiedenen Verbraucher/Erzeuger versehen werden, um auch anhand dieser Informationen die optimalen Einsatzpläne und geänderten Tarifprofile berechnen zu können. Schließlich versteht sich, dass die verschiedenen Merkmale auch in anderen als den beschriebenen und dargestellten Kombinationen angewendet werden können.

## Patentansprüche

1. Verfahren zum netzkonformen Betreiben eines Niederspannungsnetzes (1) mit einer Mehrzahl von dezentralen Einheiten (2a, 2b, 2c), die wenigstens je einen Verbraucher (4, 5) und/oder Erzeuger (6) von elektrischer Wirk- und/oder Blindenergie aufweisen, wobei jede Einheit (2a, 2b, 2c) zum Austausch elektrischer Energie über einen Netzanschlusspunkt (3a, 3b, 3c) mit dem Niederspannungsnetz (1) und zum Austausch von Informationen über ein Kommunikationsmedium (21, 22) mit einer übergeordneten, allen Einheiten (2a, 2b, 2c) gemeinsamen Einrichtung (20) verbunden ist, die von einem Händler betrieben wird, der mittels des Niederspannungsnetzes (1) elektrische Energie an die Einheiten (2a, 2b, 2c) liefert oder von diesen abnimmt, wobei in jeder Einheit (2a, 2b, 2c) vorgegebene, am Netzanschlusspunkt (3a, 3b, 3c) auftretende Netzparameter ermittelt werden und wobei die Zeitintervalle und die Höhe des Verbrauchs/der Erzeugung von elektrischer Energie durch die Verbraucher (4, 5)/ Erzeuger (6) in jeder Einheit (2a, 2b, 2c) durch einen Einsatzplan festgelegt werden, der von einem in jeder Einheit (2a, 2b, 2c) vorhandenen, vorgegebene Tarifprofile berücksichtigenden Optimierungsprogramm berechnet wird, **dadurch gekennzeichnet, dass** die Netzparameter an jedem Netzanschlusspunkt (3a, 3b, 3c) auf die Einhaltung von ihnen zugewiesenen Toleranzbereichen überwacht werden und dass die übergeordnete Einrichtung (20), wenn die Netzparameter am Netzanschlusspunkt (3a, 3b, 3c) wenigstens einer kritischen Einheit (2a) die ihnen zugewiesenen Toleranzbereiche verlassen, zumindest an diese kritische Einheit (2a) ein abgeändertes Tarifprofil übermittelt, das von deren Optimierungsprogramm übernommen wird und so gewählt ist, dass es zu einer zeitlichen Änderung des Einsatzplans in der kritischen Einheit (2a) in der Weise führt, dass sich die Netzparameter zumindest wieder den Toleranzbereichen annähern.

2. Verfahren nach Anspruch 1, **dadurch gekennzeichnet, dass** die Einhaltung der Toleranzbereiche dezentral in jeder Einheit (2a, 2b, 2c) überwacht, bei Nichteinhaltung der Toleranzbereiche ein Alarmsignal erzeugt und dieses Alarmsignal an die übergeordnete Einrichtung (20) übermittelt wird, worauf das geänderte Tarifprofil in der übergeordneten Einrichtung (20) generiert und zumindest der kritischen Einheit (2a) übermittelt wird.

3. Verfahren nach Anspruch 1 oder 2, **dadurch gekennzeichnet, dass** die übergeordnete Einrichtung (20), wenn die Netzparameter in der kritischen Einheit (2a) die ihnen zugewiesenen Toleranzbereiche verlassen, zunächst zumindest der kritischen Einheit (2a) ein Tarifanfragesignal zusendet, das Optimierungsprogramm der kritischen Einheit (2a) als Antwort darauf einen Tarifänderungsvorschlag generiert und an die übergeordnete Einrichtung (20) übermittelt, und die übergeordnete Einrichtung (20) das geänderte Tarifprofil dann unter Berücksichtigung des Tarifänderungsvorschlags erzeugt.

4. Verfahren nach Anspruch 3, **dadurch gekennzeichnet, dass** das geänderte Tarifprofil von der kritischen Einheit (2a) zwar zur Abrechnung der von ihr verbrauchten/erzeugten Energie übernommen, aber nur dann von deren Optimierungsprogramm zur zeitlichen Änderung des Einsatzplans verwendet wird, wenn es mit dem Tarifänderungsvorschlag der kritischen Einheit (2a) kompatibel ist.

5. Verfahren nach einem der Ansprüche 1 bis 4, **dadurch gekennzeichnet, dass** für den Fall, dass die Toleranzbereiche in der kritischen Einheit (2a) nicht eingehalten werden, das Tarifanfragesignal auch anderen mit der übergeordneten Einrichtung (20) verbundenen Einheiten (2b, 2c) übermittelt wird, als Antwort darauf auch in den anderen Einheiten (2b, 2c) ein Tarifänderungsvorschlag generiert und an die übergeordnete Einrichtung (20) übermittelt wird, und dass die übergeordnete Einrichtung (20) dann unter Berücksichtigung der von der kritischen Einheit (2a) und den anderen Einheiten (2b, 2c) erhaltenen Tarifänderungsvorschläge das geänderte Tarifprofil festlegt und an die kritische Einheit (2a) und die anderen Einheiten (2b, 2c) übermittelt, die das geänderte Tarifprofil dann sämtlich zur Abrechnung der von ihnen verbrauchten/erzeugten Energie verwenden.

6. Verfahren nach Anspruch 5, **dadurch gekennzeichnet, dass** das geänderte Tarifprofil zumindest von allen denjenigen anderen Einheiten (2a, 2b, 2c) zur Änderung ihres Einsatzplans verwendet wird, mit deren Tarifänderungsvorschlägen es kompatibel ist.

7. Verfahren nach einem der Ansprüche 2 bis 6, **dadurch gekennzeichnet, dass** die dezentrale Überwachung der Toleranzbereiche durch ein von der übergeordneten Einrichtung (20) an die Einheiten (2a, 2b, 2c) übermitteltes Signal eingeleitet wird.

8. Verfahren nach Anspruch 7, **dadurch gekennzeichnet, dass** die zentrale Überwachung der Toleranzbereiche durch ein von der übergeordneten Einrichtung (20) an die Einheiten (2a, 2b, 2c) übermitteltes Signal beendet wird.

9. Verfahren nach einem der Ansprüche 5 bis 8, **dadurch gekennzeichnet, dass** das geänderte Tarifprofil in der übergeordneten Einrichtung (20) festgelegt wird, wenn eine vorgewählte Anzahl der Einheiten (2a, 2b, 2c) den Tarifänderungsvorschlag übermittelt hat.

10. Verfahren nach einem der Ansprüche 1 bis 9, **dadurch gekennzeichnet, dass** die Einheiten (2a, 2b, 2c) in Gruppen eingeteilt und die Verfahrensschritte nach einem der Ansprüche 1 bis 9 in jeder dieser Gruppen separat durchgeführt werden.

11. Verfahren nach einem der Ansprüche 1 bis 10, **dadurch gekennzeichnet, dass** das geänderte Tarifprofil von der übergeordneten Einrichtung (20) nur für eine begrenzte Zeitdauer aufrecht erhalten und danach zumindest dann wieder das vor der Übermittlung des geänderten Tarifprofils gültige Tarifprofil festgelegt wird, wenn die Netzparameter in allen beteiligten Einheiten (2a, 2b, 2c) wieder in den Toleranzbereichen liegen.

12. Vorrichtung zum netzkonformen Betreiben eines Niederspannungsnetzes (1), an das eine Mehrzahl von dezentralen Einheiten (2a, 2b, 2c) angeschlossen ist, die wenigstens je einen Verbraucher (4, 5) und/oder Erzeuger (6) von elektrischer Wirk- und/oder Blindenergie aufweisen, wobei diese Einheiten (2a, 2b, 2c) zum Austausch von elektrischer Energie an je einem Netzanschlusspunkt (3a, 3b, 3c) an das Niederspannungsnetz (1) und zum Austausch von Informationen über ein Kommmunikationsmedium (21, 22) an eine übergeordnete, allen Einheiten (2a, 2b, 2c) gemeinsame Einrichtung (20) angeschlossen sind, die von einem Händler betrieben ist, der mittels des Niederspannungsnetzes (1) elektrische Energie an die Einheiten (2a, 2b, 2c) liefert oder von diesen abnimmt, und wobei jede Einheit (2a, 2b, 2c) eine Messeinrichtung (17) zur Überwachung von vorgegebenen, am Netzanschlusspunkt (3a, 3b, 3c) auftretenden Netzparametern und einen Energiemanager (16) enthält, der die Zeitintervalle und die Höhe des Verbrauchs/der Erzeugung von elektrischer Energie durch die Verbraucher (4, 5)/Erzeuger (6) mittels eines Einsatzplans festlegt, der von einem in den Energiemanager (16) jeder Einheit (2a, 2b, 2c) implementierten, vorgegebene Tarifprofile berücksichtigenden Optimierungsprogramm berechnet wird, **dadurch gekennzeichnet, dass** den Messeinrichtungen (17) Mittel zur Überwachung von den Netzparametern zugewiesenen Toleranzbereichen zugeordnet sind und dass die übergeordnete Einrichtung (20) einen über das Kommunikationsmedium (21, 22) mit den Einheiten (2a, 2b, 2c) verbundenen Zentralrechner (29) aufweist, der dazu eingerichtet ist, beim Herausfallen der Netzparameter aus den Toleranzbereichen in wenigstens einer kritischen Einheit (2a) zumindest an den Energiemanager (16) dieser kritischen Einheit (2a) ein Signal mit einem zur Übernahme in dessen Optimierungsprogramm bestimmten, abgeänderten Tarifprofil zu übermitteln, das so gewählt ist, dass es zu einer zeitlichen Änderung des Einsatzplans in der kritischen Einheit (2a) in der Weise führt, dass sich die Netzparameter zumindest wieder den Toleranzbereichen annähern.

13. Vorrichtung nach Anspruch 12, **dadurch gekennzeichnet, dass** die Messeinrichtungen (17) zur dezentralen Überwachung der Netzparameter in den Einheiten (2a, 2b, 2c) eingerichtet sind und das Mittel zur Überwachung der den Netzparametern zugewiesenen Toleranzbereiche je einen mit einer der Messeinrichtungen (17) verbundenen Alarmsignalerzeuger (18) enthält, der beim Herausfallen der Netzparameter aus den ihnen zugewiesenen Toleranzbereichen ein Alarmsignal abgibt, dass die Alarmsignale über das Kommunikationsmedium (21, 22) an den Zentralrechner (29) übermittelbar sind und dass der Zentralrechner (29) nur beim Empfang eines Alarmsignals das geänderte Tarifprofil generiert und über das Kommunikationsmedium (21, 22) zumindest an die kritische Einheit (2a) übermittelt.

14. Vorrichtung nach Anspruch 12 oder 13, **dadurch gekennzeichnet, dass** der Zentralrechner (29) beim Empfang eines Alarmsignals zunächst ein Tarifanfragesignal zumindest an den Energiemanager (16) der kritischen Einheit (2a) übermittelt, dass die Energiemanager (16) der Einheiten (2a, 2b, 2c) so eingerichtet sind, dass sie beim Empfang eines Tarifanfragesignals ein einen Tarifänderungsvorschlag enthaltendes Signal generieren und an den Zentralrechner (29) übermitteln, und dass der Zentralrechner (29) das geänderte Tarifprofil dann unter Berücksichtigung des Tarifänderungsvorschlags erzeugt.

15. Vorrichtung nach Anspruch 14, **dadurch gekennzeichnet, dass** der Energiemanager (16) der kritischen Einheit (2a) so eingerichtet ist, dass das geänderte Tarifprofil zwar zur Abrechnung der von dieser verbrauchten/erzeugten Energie übernommen, aber nur dann zur Änderung des Einsatzplans in der kritischen Einheit (2a) verwendet wird, wenn es mit dem Tarifänderungsvorschlag der kritischen Einheit (2a, 2b, 2c) kompatibel ist.

16. Vorrichtung nach einem der Ansprüche 12 bis 15, **dadurch gekennzeichnet, dass** die übergeordnete Einrichtung (20), wenn in wenigstens einer kritischen Einheit (2a, 2b, 2c) die Toleranzbereiche nicht eingehalten werden, auch anderen angeschlossenen Einheiten (2a, 2b, 2c) ein Tarifanfragesignal übermittelt, als Antwort darauf auch in den anderen Einheiten (2a, 2b, 2c) ein einen Tarifänderungsvorschlag enthaltendes Signal erzeugt und an den Zentralrechner (29) übermittelt wird, und dass der Zentralrechner (29) dann unter Berücksichtigung der von der kritischen Einheit (2a, 2b, 2c) und von den anderen Einheiten (2a, 2b, 2c) erhaltenen Tarifänderungsvorschläge das geänderte Tarifprofil festlegt und an die kritische Einheit (2a, 2b, 2c) und die anderen Einheiten (2a, 2b, 2c) übermittelt, die das geänderte Tarifprofil dann sämtlich zur Abrechnung der von ihnen verbrauchten/- erzeugten Energie verwenden.

17. Vorrichtung nach Anspruch 16, **dadurch gekennzeichnet, dass** die Energiemanager (16) aller Einheiten (2a, 2b, 2c) so eingerichtet sind, dass das geänderte Tarifprofil zumindest von allen denjenigen Einheiten (2a, 2b, 2c) zur Änderung ihres Einsatzplans verwendet wird, mit deren Tarifänderungsvorschlägen es kompatibel ist.

18. Vorrichtung nach einem der Ansprüche 12 bis 17, **dadurch gekennzeichnet, dass** der Zentralrechner (29) einen Zähler derart enthält, dass das geänderte Tarifprofil erst festgelegt wird, wenn eine vorgewählte Anzahl der angeschlossenen Einheiten (2a, 2b, 2c) das den Tarifänderungsvorschlag enthaltende Signal übermittelt hat.

19. Vorrichtung nach einem der Ansprüche 12 bis 18, **dadurch gekennzeichnet, dass** der Zentralrechner (29) Mittel zur Aufrechterhaltung des geänderten Tarifprofils für eine vorgewählte Zeit und Mittel zur danach erfolgenden Umstellung auf das bis zur Änderung gültige Tarifprofil zumindest dann aufweist, wenn die Netzparameter in allen beteiligten Einheiten (2a, 2b, 2c) wieder in den Toleranzbereichen liegen.

20. Vorrichtung nach einem der Ansprüche 12 bis 19, **dadurch gekennzeichnet, dass** das Kommunikationsmedium (21) bidirektional ausgebildet ist.

21. Vorrichtung nach einem der Ansprüche 12 bis 20, **dadurch gekennzeichnet, dass** zwischen dem Netzanschlusspunkt (3a, 3b, 3c) und zugehörigen Verbrauchern (4, 5)/Erzeugern (6) einer Einheit (2a, 2b, 2c) mit dem Energiemanager (16) verbundene Schalter (7) angeordnet sind, mittels derer die Verbraucher (4, 5)/Erzeuger (6) mit dem Netzanschlusspunkt (3a, 3b, 3c) verbindbar oder von diesem trennbar sind.
